# EUROPEAN PATENT APPLICATION

(11) **EP 2 388 669 A2**
(43) Date of publication of application: **23.11.2011**
(21) Application number: 11155478.8
(22) Date of filing: 22.02.2011
(51) Int. Cl.: G05B 19/418

(54) **Fleet mission management system and method using health capability determination**

(30) Priority: 18.05.2010 US 782275
(71) Applicant: Honeywell International Inc., Morristown, NJ 07962 (US)
(72) Inventor: Hadden, George Daniel, Morristown, NJ 07962-2245 (US); McCroskey, Robert C., Morristown, NJ 07962-2245 (US); Voges, Harold Carl, Morristown, NJ 07962-2245 (US); Busch, Darryl, Morristown, NJ 07962-2245 (US)
(74) Representative: Buckley, Guy Julian

(57) **Abstract**

A system and method are provided for planning and controlling a plurality of machines (102). A mission is assigned to each machine (102) of the plurality of machines (102). A plurality of system capabilities is computed in each machine (102) and, from the plurality of computed system capabilities, a machine mission capability is computed for each machine (102). The mission of one or more of the machines (102) may be selectively reassigned based on the computed machine mission capability of each machine (102).

## Description

This application is a continuation-in-part of U.S. Application No. 12/341,648 filed December 22, 2008.

### STATEMENT REGARDING FEDERALLY SPONSORED RESEARCH OR

### DEVELOPMENT

This invention was made with Government support under 4500046552/F33615-00-D-3053 awarded by the Lockheed Martin/Air Force Research Laboratory (AFRL). The Government has certain rights in this invention.

### TECHNICAL FIELD

The present invention generally relates to fleet management and, more particularly, to a system and method of managing the mission(s) of a fleet of machines using individual machine health capabilities.

### BACKGROUND

Various systems, such as various types of vehicles and the systems and subsystems that comprise the vehicles, may be subject to potentially severe environmental conditions, shock, vibration, and normal component wear. These conditions, as well as others, may have deleterious effects on vehicle operability. These deleterious effects, if experienced during operation, could leave little time for corrective actions. Hence, most notably in the context of vehicles, health monitoring/management systems are increasingly being used. Vehicle health monitoring/management systems monitor various health-related characteristics of the vehicle. Such operational health characteristics may, in some instances, be further decomposed to the health characteristics of major operational systems and subsystems of the vehicle.

In addition to monitoring vehicle health status, it would be desirable to determine the potential effect that a potentially degraded system, subsystem, or component may have on the overall capabilities of the vehicle, and supply information of these potential effects so that a vehicle may, if needed, be assigned a different mission. Heretofore, such capabilities have not been implemented with adequate precision and/or without undue complexity.

Hence, there is a need for a system and method that determines, with adequate precision and without undue complexity, the potential effect(s) that a degraded system, subsystem, or component may have on the overall capabilities of a vehicle, and supply information of the potential effect(s) so that a different mission may be assigned to the vehicle. The present invention addresses at least this need.

### BRIEF SUMMARY

In one embodiment, and by way of example only, a method of planning and controlling a plurality of machines is provided. A mission is assigned to each machine of the plurality of machines. A plurality of system capabilities is computed in each machine and, from the plurality of computed system capabilities, a machine mission capability is computed for each machine. The mission of one or more of the machines may be selectively reassigned based on the computed machine mission capability of each machine.

In another exemplary embodiment, a fleet planning and controlling system includes a plurality of machines and a central management processor. Each machine is configured to compute a plurality of system capabilities and a machine mission capability from the plurality of computed system capabilities. Each machine is further configured to transmit data representative of the plurality of system capabilities and data representative of the machine mission capability. The central management processor is configured to receive data representative of the plurality of system capabilities and data representative of the machine mission capability, and is further configured to assign a mission to each machine of the plurality of machines and selectively reassign the mission of one or more of the machines based on the computed machine mission capability of each machine.

Other desirable features and characteristics of the inventive fleet planning and controlling system and method will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:

FIG. 1 depicts a functional block diagram of a vehicle fleet mission management system;

FIG. 2 depicts a flowchart of an exemplary method that may be implemented by the system of FIG. 1;

FIGS. 3 and 4 depict the system of FIG. 1 illustrating various display paradigms that may be implemented;

FIG. 5 depicts a functional block diagram of a vehicle health capabilities system according to one exemplary embodiment of the present invention;

FIG. 6 depicts a representation of hierarchical data that may be used by the vehicle health capabilities system of FIG. 5;

FIG. 7 depicts one example of the hierarchical data of FIG. 6 for a vehicle mission capability of total vehicle thrust;

FIG. 8 depicts an exemplary representation of mission requirement value data that may be used by the vehicle health capabilities system of FIG. 5;

FIG. 9 depicts an exemplary alternative representation of how a mission requirement may be represented; and

FIG. 10 depicts a process diagram of an exemplary method that may be implemented by the system of FIG. 1, using the data depicted in FIGS. 5-7.

### DETAILED DESCRIPTION

The following detailed description is merely exemplary in nature and is not intended to limit the invention or the application and uses of the invention. Furthermore, there is no intention to be bound by any theory presented in the preceding background or the following detailed description. In this regard, although embodiments are described as being implemented in the context of a fleet of vehicles, the inventive concept could also be implemented in the context of fleets of other machines, such as machinery in a manufacturing plant.

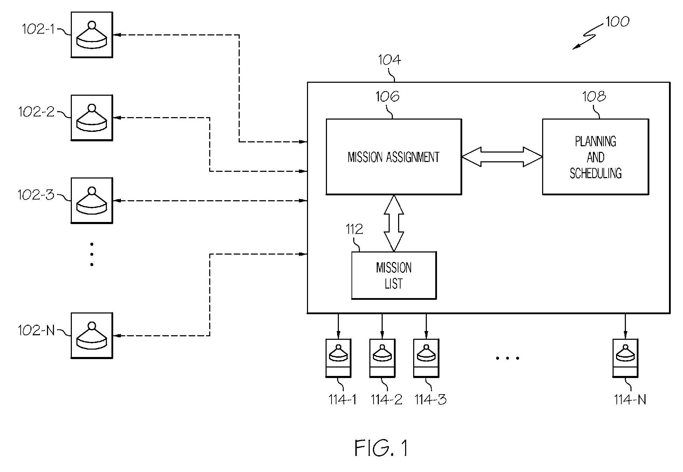

Referring to first FIG. 1, a functional block diagram of a vehicle fleet mission management system 100 is depicted. The system 100 includes a plurality of vehicles 102 (e.g., 102-1, 102-2, 102-3 ... 102-N) and a central management processor 104. It will be appreciated that the number and type of vehicles 102 may vary. For example, each vehicle 102 may be an aircraft, a satellite, a rocket, a missile, an automobile, a watercraft, a submarine, or various other vehicle types, or various combinations of vehicle types. In the depicted embodiment, each vehicle 102 is an unmanned autonomous vehicle (UAV).

The vehicles 102 are each in operable communication with the central management processor 104. Preferably, the vehicles 102 are wirelessly in operable communication with the central management processor 104, using any one of numerous suitable wireless communication protocols. Each vehicle 102 includes a vehicle health capabilities system (not depicted in FIG. 1), a particular preferred embodiment of which will be described in more detail further below. The vehicle health capabilities system in each vehicle 102 is configured to at least compute a plurality of system capabilities in its associated vehicle 102, and to compute a vehicle mission capability from these computed system capabilities. The vehicle health capabilities system in each vehicle 102 is also configured to continuously communicate these computed capabilities to the central management processor 104, and to receive various communications from the central management processor 104.

The central management processor 104 is configured to assign a mission to each vehicle 102 and, if need be, reassign the missions of one or more vehicles 102. To implement this functionality the central management processor 104 includes (or implements) a mission assignment module 106 and a planning and scheduling module 108. The mission assignment module 106 is configured to receive the computed system capabilities from each vehicle 102 and, in response to these data, to assign a mission to each vehicle 102. The missions that may be assigned to each vehicle 102 are preferably stored in a suitable memory device 112 that is in operable communication with the mission assignment module 106.

In addition to assigning an initial mission to each vehicle 102, the mission assignment module 106 is configured, as noted above, to selectively reassign the missions of one or more vehicles 102. For example, assume that the first vehicle 102-1 is initially assigned a mission that requires the use of an onboard video surveillance device. Further assume that, after this initial assignment, the onboard video surveillance device on the first vehicle 102-1 experiences a fault, and that the vehicle health capabilities system on the first vehicle 102-1 determines that, because of this fault, the first vehicle 102-1 can no longer complete the assigned mission. This capabilities information, along with capabilities information regarding various other systems and subsystems onboard the first vehicle 102-l, is transmitted back to the central management processor 104.

The central management processor 104, and more specifically the mission assignment module 106, uses the capabilities information received from the first vehicle 102-1 to determine if the first vehicle 102-1 can be assigned a different mission. The mission assignment module 106 also determines, using capabilities information received from the other vehicles 102-2, 102-3 ... 102-N in the fleet, whether a mission presently assigned to one of these vehicles 102-2, 102-3 ... 102-N can be reassigned to the first vehicle 102-1 and whether the mission that was initially assigned to the first vehicle 102-1 1 can be reassigned to one of the other vehicles 102-2, 102-3 ... 102-N. If so, the mission assignment module 106 reassigns the mission that was initially assigned to the first vehicle 102-1 to another one of the vehicles 102-2, 102-3 ... 102-N, and reassigns the mission it was initially assigned to the first vehicle 102-1. The updated mission assignments are then transmitted to the planning and scheduling module 108.

The planning and scheduling module 108 is configured to plan and schedule the assigned missions of each vehicle 102-2, 102-3 ... 102-N, and to transmit the mission plans and schedules to the appropriate vehicles 102-2, 102-3 ... 102-N. The planning and scheduling module 108 may be variously implemented, but in a particular preferred embodiment it is implemented using at least portions of the system and method described in U.S. Patent No. 7,603,212, which is assigned to the assignee of the instant invention, and the entirety of which is hereby incorporated by reference. In some embodiments, the mission assignment module 106 may be implemented as an enhanced capability of the planning and scheduling module 108 disclosed in U.S. Patent No. 7,603,212.

The central management processor 104 may additionally be configured to generate and display indicia representative of the overall mission capability of each vehicle 102-1, 102-2, 102-3 ... 102-N. The indicia may be implemented using any one of numerous types of indicia and display paradigms. In a preferred embodiment, however, the indicia are implemented using color-coded vehicle indicators 114 (e.g., 114-1, 114-2, 114-2 ... 114-N), with each being associated with one of the vehicles 102-1, 102-2, 102-3 ... 102-N in the fleet. More specifically, if a vehicle 102 is capable of completing its assigned mission and has no degraded system capabilities, its associated vehicle indicator 114 is rendered at least partially in a first color. If a vehicle 102 is capable of completing its assigned mission and has one or more degraded system capabilities, its associated vehicle indicator 114 is rendered at least partially in a second color. If a vehicle 102 is incapable of completing its assigned mission, which will typically be due to one or more degraded system capabilities, its associated vehicle indicator 114 is rendered at least partially in a third color. Although the specific colors that are used may vary, in one particular embodiment the first, second, and third colors are green, yellow, and red, respectively. As may be appreciated, the color-coded vehicle indicators 114 provide a generalized indication to an operator as to the mission capability of each vehicle 102.

The central management processor 104 may be implemented, as needed or desired, using hardware, software, firmware, or various combinations thereof. In this regard, such hardware may include, for example, one or more general-purpose or application-specific programmable processors, suitable memory (separate from or integral to the processor(s)), and/or suitable input/output (I/O) devices. Moreover, the central management processor 104 may be described in the context of implementing a plurality of functional modules or blocks. Similarly, each of these functional modules or blocks may, as needed or desired, be implemented using hardware, software, firmware, or various combinations thereof. Furthermore, the central management processor 104 may implement functional modules or blocks in addition to those depicted in FIG. 1. Descriptions of these additional functional modules or blocks are not needed to fully describe or enable the claimed invention, and are therefore not provided.

Moreover, it is noted that in some embodiments, one or more of the functions of the central management processor 104 described herein may be implemented in other portions of the system 100. For example, one or more processors in one of the vehicles 102 (described below) may be configured to selectively reassign missions. Alternatively, this function may be implemented by processing distributed across the vehicles 102. In addition, the above-described the health computations on the vehicles 102 may be, in some embodiments, lower-level health indicators, and the vehicle capability computations may occur off-vehicle, such as within the central management processor 104. As such, whenever the central management processor 104 is referred to herein, all or portions thereof may embody one or more centrally located entities or one or more distributed entities.

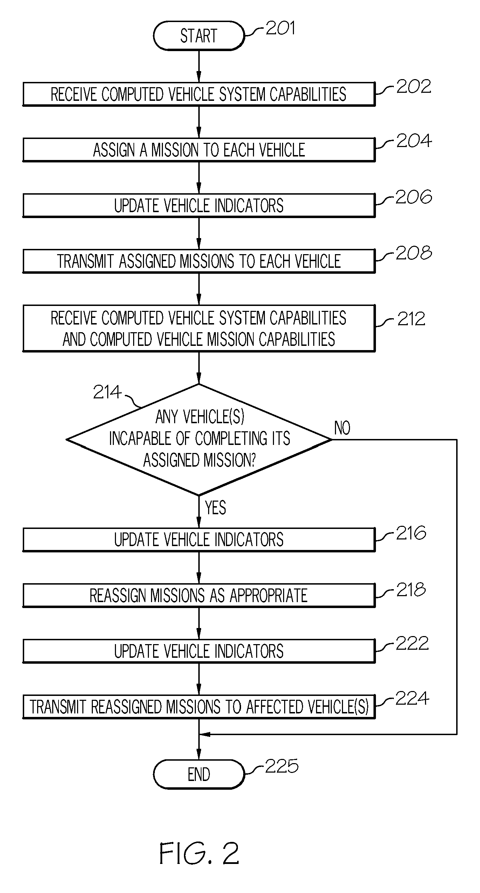

Having described the general structure and function of the central management processor 104, an exemplary process implemented by the central management processor 104 for planning and controlling a vehicle fleet is depicted in FIG. 2 and will now be described. In doing so, it is noted that the parenthetical references in the following description refer to like numbered blocks in the process flowchart of FIG. 2, and the non-parenthetical reference numerals refer to elements described above in connection with FIG. 1. Moreover, various portions of the process may be performed by different elements of the central management processor 104. It should additionally be appreciated that the process may include any number of additional or alternative process steps, at least some of the process steps need not be performed in the illustrated order, and the process may be incorporated into a more comprehensive procedure or process having additional functionality not described in detail herein.

Initially, the central management processor 104 receives the computed system capabilities from each vehicle 102 (202). As was noted above, a preferred system and method implemented in each vehicle 102 for making these computations will be described in more detail further below. Thereafter, based on the computed system capabilities, the central management processor 104 computes one or more overall missions and/or assigns a mission to each vehicle 102 (204). That is, in some instances an overall mission may be predetermined, and the central management processor 104 may be configured to assign a mission to each vehicle 102 to complete the overall mission. In other instances, the central management processor 104 may be configured to compute one or more overall missions as well as assigning a mission to each vehicle 102 to complete the computed overall mission(s). In any case, the central management processor 104 then updates the vehicle indicators 114 (206). As may be appreciated, each vehicle indicator 114 will typically be rendered at least partially in the first color. Though unlikely, it will nonetheless additionally be appreciated that one or more vehicle indicator 114 could initially be rendered at least partially in the second or third color. The assigned missions are then transmitted back to each vehicle 102 (208).

After the initial mission assignments are transmitted to the vehicles, both the system capabilities and mission capabilities of each vehicle 102 are continuously computed and transmitted, and are received by the central management processor 104 (212). Using these data, the central management processor 104 determines if any vehicle 102 is incapable of completing its assigned mission (214). If not, then the process loops back to await receipt of updated system capabilities and mission capabilities from each vehicle 102. If, however, one or more vehicles 102 is incapable of completing its assigned mission, the vehicle indicator 114 for the one or more incapable vehicles 102 is updated (216) such that it is rendered at least partially in the third color.

The central management processor 104 then determines if any of the one or more incapable vehicles 102 is capable of completing another currently assigned mission and, if so, reassigns the missions to the appropriate vehicles 102 (218). The vehicle indicators 114 are thereafter updated (222), and the reassigned missions are transmitted back to the affected vehicles 102 (224).

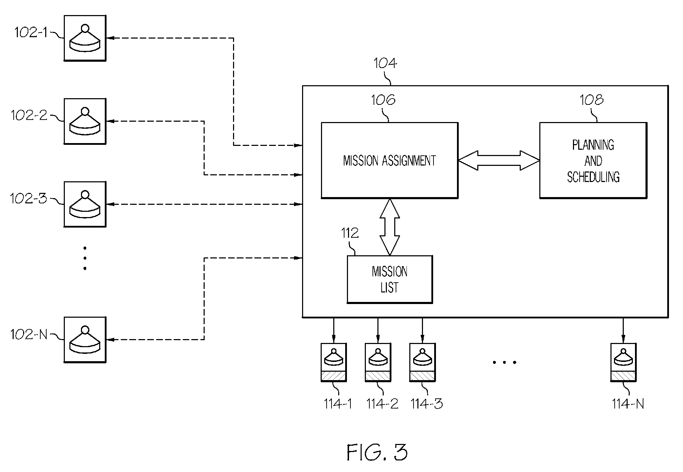

Before proceeding further, it is noted that when the vehicle indicators 114 are updated after the mission reassignments, the associated vehicle indicators 114 may be rendered at least partially in the first color or the second color, depending upon the system capabilities of the affected vehicles 102. To more clearly illustrate this, the previously used example will once again be referenced. In that example, it was assumed that the first vehicle 102-1 was initially assigned a mission requiring the use of an onboard video surveillance device. After this initial assignment, the onboard video surveillance device experienced a fault, and the vehicle health capabilities system on the first vehicle 102-1 determined that, because of this fault, the first vehicle 102-1 could no longer complete the assigned mission. As depicted in FIG. 3, when this information is transmitted back to the central management processor 104 the indicia 114-1 associated with the first vehicle 102-1 is rendered at least partially in the third color (e.g., red).

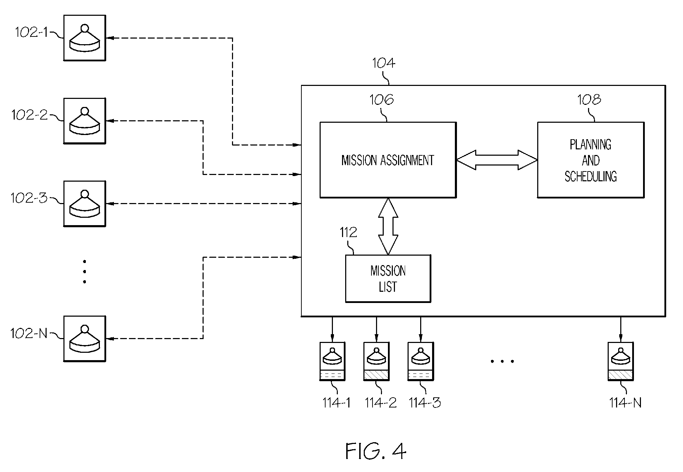

Now, extending this example further, it is assumed that the central management processor 104 determines that the third vehicle 102-3 is capable of completing the mission initially assigned to the first vehicle 102-1, and that the first vehicle 102-1 is capable of completing the mission initially assigned to the third vehicle 102-3. However, the central management processor 104 also determines, from the most recent system capabilities data, that, upon reassigning the missions, the first and third vehicles 102-1, 102-3 will have one or more degraded mission capabilities. As a result, and as is depicted in FIG. 4, the indicia 114-1, 114-3 associated with the first and third vehicles 102-1, 102-3 are rendered at least partially in the second color (e.g., yellow).

The above-described example is merely one example of numerous scenarios that could result. For example, with the system 100 described herein one or more vehicles 102 could degrade during an assigned mission. If, however, the degraded vehicle(s) may complete the assigned mission(s), then a reassignment will not take place. If one or more vehicles degrade to a point that the vehicle(s) cannot complete the an assigned mission(s), then all or part of the mission(s) assigned to the vehicle(s) may be aborted, swapped with another capable vehicle(s), or assigned to an idle vehicle. Moreover, as previously alluded to, missions may be assigned to vehicles prior to mission execution based on current and/or prognosticated vehicle capabilities.

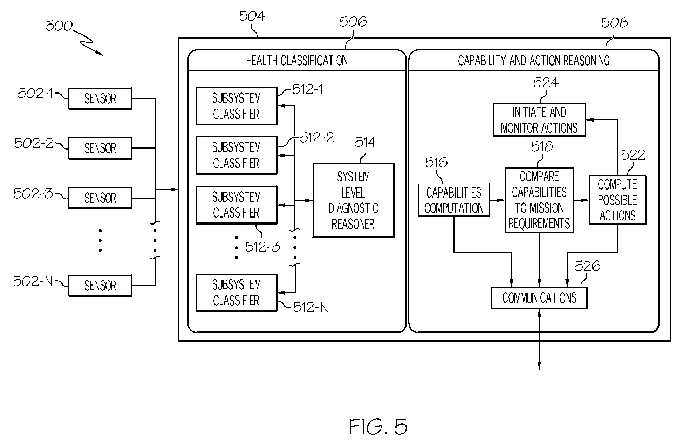

It was previously noted that each vehicle 102 includes a vehicle health capabilities system. With reference to FIG. 5, a functional block diagram of an exemplary embodiment of a vehicle health capabilities system 500 is depicted and, for completeness, will now be described. The depicted system 500 includes a plurality of sensors 502 (e.g., 502-1, 502-2, 502-3 ..., 502-N) and a processing subsystem 504. The sensors 502 are each operable to sense a parameter and supply sensor data representative thereof. It will be appreciated that the number and type of sensors 502 may vary depending, for example, on the particular type of vehicle in which the system 500 is installed. Moreover, a plurality of the sensors 502 may be used to sense parameters in the same vehicle subsystem. For example, a plurality of the sensors 502 may be used to sense a plurality of parameters in one of a plurality of non-illustrated engines. No matter the particular number and type of sensors 502 used and the number and type of parameters that are sensed, each sensor 502 supplies sensor data representative of the sensed parameter to the processing subsystem 504.

The processing subsystem 504, which may also be referred to herein as a system health capability reasoner (SCHR), is coupled to receive the sensor data from each of the sensors 502. The processing subsystem 504 is configured to process the sensor data in a manner that allows of one or more capabilities of the vehicle 102 to be determined and, if needed, mitigating actions that should be implemented. More specifically, the processing subsystem 504 computes one or more capabilities of the vehicle 102 and, based on this computation, determines what mitigating actions, if any, should be implemented. To implement this functionality the processing subsystem 504 implements a plurality of modules. These modules, at least in the depicted embodiment, include a health classification module 506 and a capability and action reasoning module 508, each of which will be described in more detail further below.

Before describing the health classification module 506 and the capability and action reasoning module 508, it is noted that the processing subsystem 504 may be implemented, as needed or desired, using hardware, software, firmware, or various combinations thereof. In this regard, such hardware may include, for example, one or more general-purpose or application-specific programmable processors, suitable memory (separate from or integral to the processor(s)), and/or suitable input/output (I/O) devices. Moreover, the health classification module 506 and the capability and action reasoning module 508 will each be described in the context of implementing a plurality of functional modules or blocks. Similarly, each of these functional modules or blocks may, as needed or desired, be implemented using hardware, software, firmware, or various combinations thereof. Furthermore, the health classification module 506 and the capability and action reasoning module 508 may each implement functional modules or blocks in addition to those depicted in FIG. 5. Descriptions of these additional functional modules or blocks are not needed to fully describe or enable the claimed invention, and are therefore not provided.

Turning now to a description of the health classification module 506, it is seen that this module 506 implements at least a plurality of subsystem classifiers 512 (e.g., 512-1, 512-2, 512-3 ..., 512-N) and a system level diagnostic reasoner 514. The subsystem classifiers 512 are each associated with a particular vehicle subsystem, and each receives sensor data supplied from one or more of the sensors 502. More specifically, each subsystem classifier 512 receives sensor data from the one or more sensors 502 that sense parameters associated with the same subsystem with which the subsystem classifier is associated. For example, if the first subsystem classifier 512-1 is associated with one or more engines, then it will receive sensor data from the one or more sensors 502 that sense engine-related parameters, if the second subsystem classifier 512-2 is associated with an avionics systems, then it will receive sensor data from the one or more sensors 502 that sense avionics system-related parameters, and so on. The subsystem classifiers 512, based on the sensor data each receives, and implementing any one of numerous known algorithms, determine and classify (e.g., compute) vehicle faults at the subsystem level.

The system level diagnostic reasoner 514 communicates with each of the subsystem classifiers 512. The system level diagnostic reasoner 514 determines and classifies vehicle faults at the system level. That is, the system level diagnostic reasoner 514 uses sensor data and/or classifier-supplied data associated with all of the subsystems and, implementing any one of numerous known algorithms, determines and classifies (e.g., computes) vehicle faults at the system level.

The computed vehicle subsystem faults and the computed vehicle system faults together constitute what is referred to herein as the computed system health data. The computed system health data not only indicate the presence of particular faults, but a computed value associated with a particular fault (though not all faults may have a computed value). For example, in the context of a vehicle, the computed health system data supplied by the health classification module 506 will not only indicate that a low tire pressure fault is present, but will additionally include the actual tire pressure value. It will be appreciated that the computed system health data may be used for various diagnostic and prognostic purposes, as is generally known in the art. In the SHCR, however, the computed system health data are also (or instead) used in the capability and action reasoning module 508, an embodiment of which will now be described.

The capability and action reasoning module 508 includes at least a capabilities computation module 516, and may additionally include, at least in some embodiments, a capabilities comparison module 518 and an action computation module 522. The capabilities computation module 516 receives, or at least selectively retrieves, the computed system health data from the health classification module 506. The capabilities computation module 516, based on these data, computes one or more capabilities of each of the various vehicle subsystems, at least some of which may impact overall vehicle mission or a particular aspect of the overall vehicle mission. The methodology that the capabilities computation module 516 implements to compute these capabilities will be described in more detail further below. The capabilities computed by the capabilities computation module 516 are supplied to, or selectively retrieved by, the capabilities comparison module 518.

If included, the capabilities comparison module 518, using the computed capabilities supplied to or selectively retrieved from the capabilities computation module 516, compares the computed capabilities to one or more vehicle mission requirement values, preferably before, during, and after a particular mission. The capabilities comparison module 518, based on the comparison of the overall vehicle mission capability and the vehicle mission requirement value(s), determines if a corrective action should be initiated. If it is determined that a corrective action should be initiated, the action computation module 522, if included, computes the particular mitigating action (or actions) that should be initiated. More specifically, the action computation module 522 computes the mitigating action(s) based on the computed capabilities and the vehicle mission requirement value(s). The capabilities comparison module 518 may also receive data representative of future vehicle mission requirements, and may compare the computed capabilities to the future vehicle mission requirements to determine which, if any, of the future vehicle mission capabilities may or may not be met. It will be appreciated that in some embodiments, one or more of the functions of the capabilities comparison module 518 and/or the action computation module 522 may be implemented in whole or in part in the central management processor 104.

As FIG. 5 also depicts, the capability and action reasoning module 508, at least in the illustrated embodiment, further includes an action initiation and monitor module 524 and a communications module 526. The action initiation and monitor module 524 receives, or at least selectively retrieves, the mitigating action(s) computed by the action computation module 522, and automatically implements and monitors the particular mitigating action(s). For example, if the computed mitigating action were to increase fuel flow to one or more vehicle engines, to thereby increase overall vehicle thrust to a desired thrust magnitude, the action initiation and monitor module 524 would ensure that this mitigating action is automatically initiated, and monitor the progress of the mitigating action.

The communications module 526, at least in the depicted embodiment, is in operable communication with the capabilities computation module 516, the capabilities comparison module 518, and the action computation module 522. The communications module 526 is configured to at least selectively transmit data representative of, for example, one or more of the computed capabilities, the determination of whether a corrective action should be initiated, and the computed mitigating action(s), to the central management processor 104.

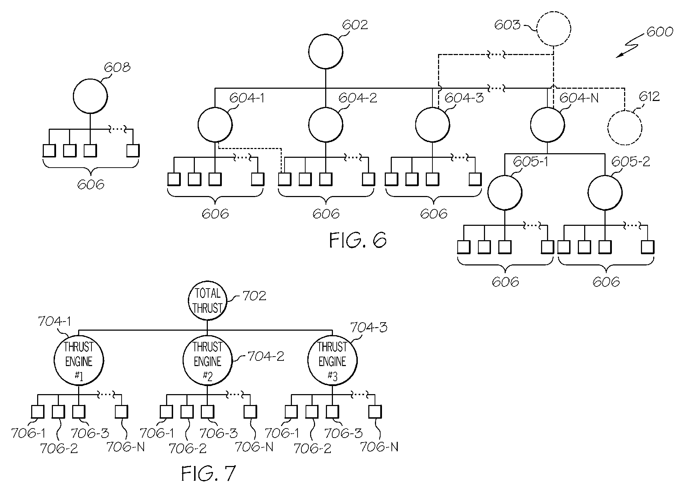

Referring now to FIG. 6, it was noted above that the capabilities computation module 516 computes, based on the system health data, the capability of each of the various vehicle subsystems that may impact either overall vehicle mission or a particular aspect of the overall vehicle mission. To do so, the capabilities computation module 516 uses what are referred to herein as capability data. These data are system capabilities that are represented as a directed acyclic graph 600. Within each directed acyclic graph 600 at least one of the capabilities may be a mission-related capability. Moreover, the vehicle may have an overall capability, which may be represented as a directed acyclic graph that may include capabilities associated with one or more other directed acyclic graphs. A directed acyclic graph 600, such as the one depicted in FIG. 6, may include zero or more higher-level capabilities and one or more lowest-level capabilities.

As used herein, a higher-level capability is one that is quantifiably impacted by at least one other capability. A lowest-level capability is one that is not quantifiably impacted by any other capabilities. Rather, a lowest-level capability is one that is quantifiably impacted by a system fault (e.g., appropriate system health data) or system parameter (e.g., an operational parameter such as speed, fuel level, etc.). It will be appreciated that in some instances a lowest-level capability may not be impacted by a system fault or parameter. Such lowest-level capabilities are referred to herein as constant capabilities. It may thus be seen that in the directed acyclic graph 600 of FIG. 6, the higher-level capability 602 is a quantifiably impacted by N-number of other capabilities 604 (e.g., 604-1, 604-2, 604-3 ... 604-N). Of these N-number of other capabilities 604, the Nth capability (604-N) is quantifiably impacted by two other capabilities 605 (605-1, 605-2). Thus, the Nth capability 604-N is a higher-level capability. The first three capabilities 604-1, 604-2, 604-3 that quantifiably impact higher-level capability 602, and the two capabilities 605-1, 605-2 that quantifiably impact the Nth capability 604-N, are quantifiably impacted by one or more system faults or system parameters 606. Indeed, it is seen that the quantifiable impact of the one or more system faults and/or parameters 606 on each of these capabilities 604-1, 604-2, 604-3, 605-1, 605-2 is represented as a function of the one or more system faults and/or parameters 606 on (e.g., is mapped to) each of these capabilities 604-1, 604-2, 604-3, 605-1, 605-2. Thus, these five capabilities 604-1, 604-2, 604-3, 605-1, 605-2 are lowest-level capabilities.

The directed acyclic graphs that comprise the capability data used in the capabilities computation module 516 may vary in structure from that depicted in FIG. 6. For example, one or more higher-level capabilities may quantifiably impact more than one other higher-level capability, and a system fault or system parameter 606 may quantifiably impact more than one lowest-level capability. This is depicted in phantom in FIG. 6, where the third and fourth lowest-level capabilities 604-3, 604-4 both quantifiably impact a second higher-level capability 603, and one of the system faults and or parameters 606 is commonly mapped to both the first and second lowest-level capabilities 604-1, 604-2. Moreover, and as FIG. 6 further depicts, in some instances a capability may be represented as only a single lowest-level capability 608.

Before proceeding further, it was noted above that a lowest-level capability may also, in some instances, be a constant capability; that is, a capability that is not impacted by a system fault or parameter. For completeness, a constant capability 612 is also depicted in phantom in FIG. 6. In the depicted embodiment, this constant capability 612 quantifiably impacts the higher-level capability 602.

A relatively simple, yet illustrative example of capability data that may be used by the capabilities computation module 516 is depicted in FIG. 7. In this example, the directed acyclic graph includes a single higher-level capability 702, which is also a mission-related capability, of total vehicle thrust. The total vehicle thrust higher-level capability 702 is quantifiably impacted by other thrust capabilities, one each associated with each engine. In the depicted example, the vehicle is assumed to include three engines, and the total vehicle thrust capability 702 is the vector sum of each of the three individual engine thrust capabilities 704-1, 704-2, 704-3. Thus, the total thrust capability 702 is quantifiably impacted by these three capabilities 704-1, 704-2, 704-3. The individual engine thrust capabilities 704-1, 704-2, 704-3 are in turn impacted by their specific individual engine health and/or system parameters, and are thus lowest-level capabilities. The calculated engine health data (e.g., engine faults) and system parameters 706 associated with each engine are mapped to the individual engine thrust capabilities 704-1, 704-2, 704-3.

It will be appreciated that individual engine thrust capability 704-1, 704-2, 704-3 may be impacted by any one of numerous faults and/or parameters, or various combinations of these numerous faults and parameters. As such, FIG. 7 depicts that a plurality of engine faults and parameters (e.g., 706-1, 706-2, 706-3 ..., 706-N) may be mapped to each individual engine thrust capability 704. To provide an illustrative example of one particular type of engine fault 706 and its individual and overall impact, it is known that blockage in a fuel line may result in reduced engine thrust. Hence, this particular engine fault 706 is quantifiably mapped to its associated engine capability 704. If, during operation, the health classification module 504 determines that a fuel line blockage fault 706 (having a magnitude of 20 % blockage) exists for an engine (e.g., Engine 1), the capabilities computation module 516 will compute a concomitant reduction in the individual engine thrust capability 704-1 for that engine, as well as a reduction in the total vehicle thrust capability 702.

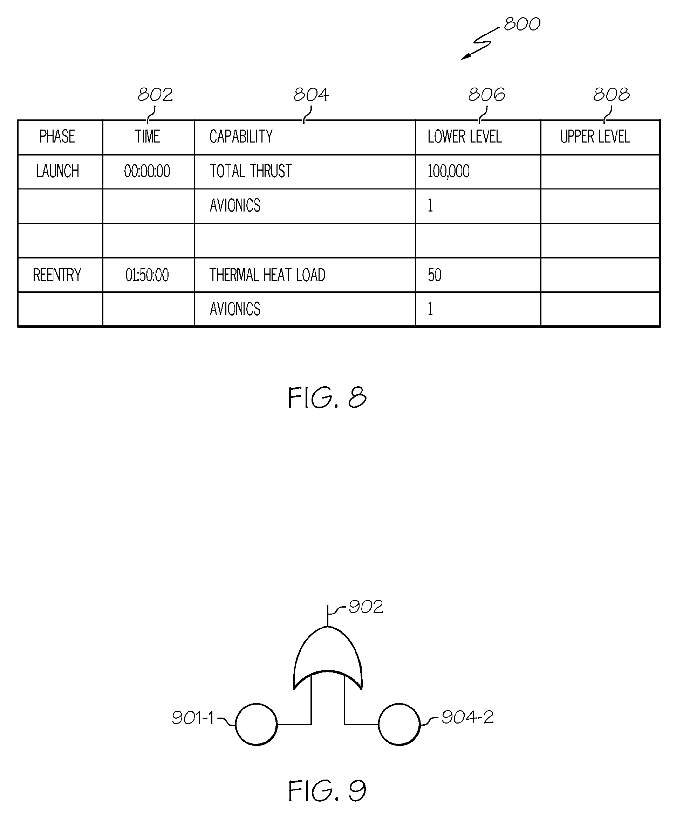

It was additionally noted above that the capabilities comparison module 518, if included, compares the computed capabilities (e.g., the mission-related capabilities) to one or more vehicle mission requirement values and, based on this comparison, determines if a corrective action should be initiated. The manner in which this comparison is implemented may vary, but in one particular embodiment the computed capabilities are compared to appropriate vehicle mission requirement value data. These data may, at least in one embodiment, be stored in a table format. An example of one such table format is depicted in FIG. 8, and will now be described.

The exemplary table 800 depicts vehicle mission requirement value data associated with two different operational phases of a vehicle. In this case, the vehicle is a UAV-type vehicle that is controlled to implement at least a Launch Phase and a Reentry Phase. The depicted table 800 includes time data 802, mission-related capability category data 804, lower level data 806, and upper level data 808. It will be appreciated that these particular data are merely exemplary of one particular embodiment and could be varied, as needed or desired. Similarly, the data values depicted in FIG. 8 and described herein are merely exemplary of one particular embodiment and may also be varied, as needed or desired.

The time data 802 indicates at what point in time, during vehicle operation, each operational phase is scheduled to commence. In the depicted embodiment the Launch Phase, as may be appreciated, commences at time zero (e.g., 00:00:00) and the Reentry Phase begins 1 hour and 50 minutes (e.g., 01:50:00) after commencement of the Launch Phase. The capability category data 804 include entries for each of the particular high-level/mission-related capabilities associated with each phase. In the depicted embodiment, two high-level/mission-related capabilities are associated with each phase. For the Launch Phase the two high-level/mission-related capabilities are Total Thrust and Avionics, and for the Reentry Phase the two high-level/mission-related capabilities are Thermal Heat Load and Avionics.

The lower level data 806 and upper level data 808 represent the minimum and maximum values, respectively, for each high-level/mission-related capability during each launch phase. For this particular example, there are only lower level data 806. As may be seen, the minimum total thrust value during the Launch Phase of the vehicle is 100,000 lbs, and the minimum number of operating avionics channels is one (1). During the Reentry Phase, the minimum Thermal Heat Load is 50 BTU/ft², and the minimum number of operating avionics channels is again one (1).

In addition to or instead of a mission requirement table 800, some mission requirements may be represented as a logical combination of a plurality of capabilities. In such embodiments, the determination of whether the appropriate mission requirement is met is based on the logical outcome of the logical combination. An example of such an embodiment is depicted in FIG. 9. In this embodiment, the mission requirement 902 is represented as the logical-OR of two capabilities 904-1, 904-2. That is, if either capability 904-1, 904-2 is a logical "true" then the mission requirement is met. It will be appreciated that the logical combination that may be implemented need not be a logical-OR, but may be any one of numerous logical combinations, including logical-AND, -NAND, NOR, XOR, etc., just to name a few.

Though not depicted in FIGS. 8 or 9, in some embodiments the vehicle mission requirement value data may additionally include mitigation action data. These data would represent the mitigating action (or actions) that should be implemented, either automatically or manually, if the high-level/mission-related capability is below its minimum value or above its maximum value. It will be appreciated that in such instance, the action computation module 522 described above and depicted in FIG. 5 may be eliminated.

Before proceeding further it is noted that the capability data and the vehicle mission requirement value data may be stored in memory that forms part of the processing subsystem 504 or in memory external to the processing subsystem 504. Additionally, the capability data and vehicle mission requirement value data may be stored in shared memory (within or separate from the processing subsystem 504) or may be stored in separate memory.

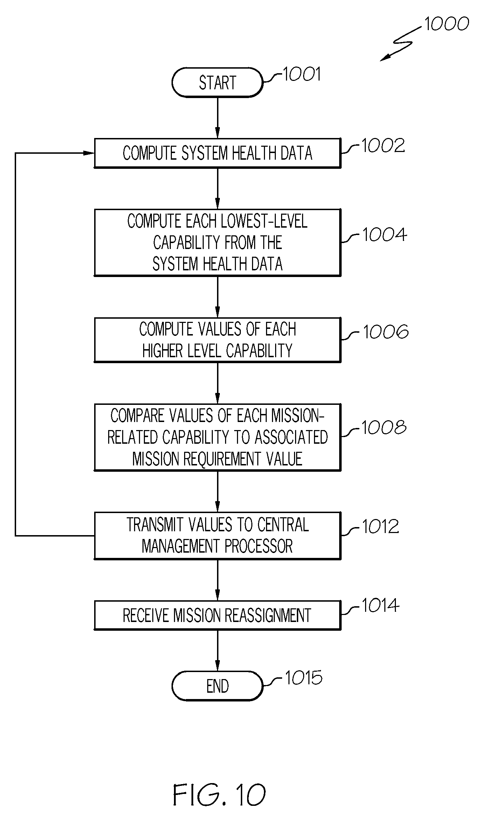

Having described the general structure and function of the vehicle health capabilities system 500, an exemplary process implemented by the system 500 for determining one or more mission-related capabilities of a vehicle is depicted in FIG. 10 and will now is described. As before, it is noted that the parenthetical references in the following description refer to like numbered blocks in the process flowchart of FIG. 10, and the non-parenthetical reference numerals refer to elements described above in connection with FIG. 5.

Upon initiating the process 1000, the processing subsystem 504, using the sensor data from the sensors 502, computes the system health data (1002). Each of the lowest-level capabilities are then computed from the system health data (1004) and, when appropriate, each of the higher-level capabilities are computed from the lowest-level capabilities (1006). The values of each of the mission-related capabilities (whether higher-level or lowest-level capabilities) that were just computed are then compared to appropriate mission requirement values or supplied to appropriate combination logic (1008). The values of each of the computed mission-related capabilities (whether higher-level or lowest-level capabilities) and, in some embodiments, the results of the comparisons to the appropriate mission requirement values, are transmitted to the central management processor 104 (1012). Any mission reassignments, as discussed above, are received from the central management processor 104 (1014). Though not depicted in the process flowchart, it will be appreciated that all data need not be transmitted every cycle data, and that various data reduction algorithms may be implemented prior to transmission to conserve bandwidth.

Returning once again to FIG. 1, it is noted that the vehicle indicators 114 may be commanded to display, in addition to what has already been described, various types of information using various display paradigms. In some embodiments, vehicle indicia may be commanded to display the directed acyclic graphs 600 associated with the vehicle/system. The central management processor 104 may also allow a user to selectively expand and collapse one or more of the displayed lattices 600, if needed or desired. The vehicle indicators 114 may also be selectively commanded to numerically display one or more capabilities, or to display the status of one or more actual capabilities to one or more capability requirements using various highlighting techniques (e.g., color, texture, etc.), and/or bar or dial displays to indicate the status of one or more actual capabilities as compared to one or more dynamic threshold requirements.

The vehicle indicators 114 may also be selectively commanded to display the above-described mission requirement table(s) and, either automatically or in response to input from a user, selectively expand and collapse one or more of the displayed mission requirement tables based, for example on a particular mission phase. In some embodiments, the mission phase may be highlighted. When one or more mission requirements tables are displayed, the vehicle indicators 114 may be selectively commanded to highlight any rows in the displayed mission requirement tables based on whether the particular capability is met or unmet.

In addition to the above, the vehicle indicators 114 may be selectively commanded to display a plot of various vehicle/system requirements versus time (or mission phase) overlaid with actual vehicle/system capabilities, and/or display various vehicle/system requirements and capabilities using synoptic diagrams, and/or display at least portions of one or more directed acyclic graphs 600.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of planning and controlling a plurality of machines (102), the method comprising the steps of:
assigning a mission to each machine (102) of the plurality of machines (102);
computing a plurality of system capabilities in each machine (102);
computing a machine mission capability for each machine (102) from its plurality of computed system capabilities; and
selectively reassigning the mission of one or more machines (102) of the plurality of machines (102) based on the computed machine mission capability of each machine (102).

2. The method of Claim 1, further comprising:
transmitting the plurality of computed system capabilities and the machine mission capability from each machine (102) to a central planning processor (104);
selectively reassigning the mission of the one or more machines (102) in the central planning processor (104); and
transmitting the selectively reassigned missions from the central planning processor (104) to the one or more machines (102).

3. The method of Claim 1, further comprising:
computing a plurality of initial system capabilities in each machine (102); and
assigning the mission to each machine (102) based on its computed initial system capability.

4. The method of Claim 4, further comprising:
transmitting the plurality of computed initial system capabilities from each machine (102) to a central planning processor (104);
assigning the mission to each machine (102) in the central planning processor (104); and
transmitting the assigned missions from the central planning processor (104) to each machine (102).

5. The method of Claim 1, further comprising:
generating indicia (114-1) representative of the machine mission capability of each machine (102).

6. The method of Claim 1, wherein the step of computing the plurality of system capabilities in each machine (102) comprises, for each system:
representing a capability of the system as at least a lowest-level capability, the lowest-level capability quantifiably impacted by one or more system faults (606), when present, and by no other capabilities of the system;
representing the quantifiable impact of the one or more system faults (606) on the lowest-level capability as a function of the one or more system faults (606) on the lowest-level capability; and
computing a value of the capability of the system from at least the one or more system faults (606) that are present.

7. The method of Claim 8, wherein each system includes a plurality of capabilities, and wherein the method further comprises, for each system:
representing the capabilities of the system as a directed acyclic graph (600) that includes one or more higher-level capabilities and the lowest-level capability, each higher-level capability quantifiably impacted by the lowest-level capability or another higher-level capability; and
computing a value of the higher-level capability from the lowest-level capability or the other higher-level capability.

8. The method of Claim 9, wherein:
the other higher-level capability is quantifiably impacted by another lowest-level capability; and
the method further comprises:
computing a value of the other higher-level capability from the other lowest-level capability, and
computing a value of the higher-level capability from the other higher-level capability.

9. The method of Claim 8, further comprising:
representing a plurality of system capabilities as directed acyclic graphs (600) that each include one or more higher-level capabilities and one or more lowest-level capabilities, each higher-level capability in each directed acyclic graph (600) quantifiably impacted by a lowest-level capability or another higher-level capability; and
computing a value of each higher-level capability from one or more lowest-level capabilities or another higher-level capability.

10. A machine fleet planning and controlling system, comprising:
a plurality of machines (102), each machine (102) configured to compute (i) a plurality of system capabilities and (ii) a machine mission capability from the plurality of computed system capabilities, each machine (102) further configured to transmit data representative of the plurality of system capabilities and data representative of the machine mission capability; and
a central management processor (104) configured to receive the data representative of the plurality of system capabilities and data representative of the machine mission capability, and further configured to (i) assign a mission to each machine (102) of the plurality of machines (102) and (ii) selectively reassign the mission of one or more of the machines (102) based on the computed machine mission capability of each machine (102).
